# EUROPEAN PATENT APPLICATION

(11) **EP 2 226 965 A1**
(43) Date of publication of application: **08.09.2010**
(21) Application number: 09154358.7
(22) Date of filing: 04.03.2009
(51) Int. Cl.: H04L 9/08

(54) **Method for generating cryptographic keys.**

(71) Applicant: Nederlandse Organisatie voor Toegepast -Natuurwetenschappelijk Onderzoek TNO, 2628 VK Delft (NL)
(72) Inventor: The designation of the inventor has not yet been filed
(74) Representative: Hatzmann, Martin

(57) **Abstract**

Method for generating, in a key generation session, cryptographic keys which can be used in future secure communication sessions. The key generation session comprises performing a gesture with both terminals, deriving, in both terminals, a digital data string from the terminal's gesture. In each terminal, a cryptographic key is then formed, based on the digital data string, and storing that cryptographic key in each terminal. After that the identical keys, stored in both terminals, can be used in future secure communication sessions. A terminal (1, 2) suitable for this method comprises sensor means (5, 6) suitable for generating, due to a motion (3) undergone by the terminal during the key generation session, a digital data string. The terminal, moreover, comprises processing means (7, 8) arranged for forming a cryptographic key based on the digital data string generated by the sensor means, as well as storing means (9, 10) arranged for storing in the terminal, the cryptographic key formed in the processing means.

## Description

The invention concerns a method for generating, in a key generation session, cryptographic keys in two (or more) devices which can be used in one or more future secure communication sessions between these devices.

In cryptography, a shared secret is a piece of data only known to the parties involved in a secure communication. The shared secret can be a password, a passphrase, a big number or an array of randomly chosen bytes. The shared secret is either shared beforehand between the communicating parties, in which case it can also be called a *pre-shared secret.* Or it is created at the start of the communication session by using a key-agreement protocol, for-instance using public-key cryptography such as Diffie-Hellman or using symmetric-key cryptography such as Kerberos. The shared secret can be used for authentication (for instance when logging in to a remote system) using methods such as challenge-response or it can be fed to a key derivation function to produce one or more keys to use for encryption and/or MACing of messages.

In a pre-shared key method, before a secure communication session is set up, both parties must be provided with a cryptographic key (the shared secret) in a prior key generation session. To that end the parties may physically meet each other in order to exchange the relevant key. Another option is that the key(s) are transmitted to all parties via a (of course) secure communication path.

It is one aim of this invention to provide a simple and solid method for generating such cryptographic keys to be used for subsequent secure sessions.

According to the invention, it is preferred the key generation session to comprise the following steps:
- performing identical motions (gestures) with each of said terminals;
- deriving, separately in each terminal, from the motion performed by it, a digital data string;
- forming, separately in each terminal, identical cryptographic keys based on the relevant terminal's digital data string;
- storing, separately in each terminal, said identical cryptographic keys.

In the case of e.g. two terminals which are to be provided with identical keys to be used during one or more subsequent secure session, during the key generation step both terminals may be taken in the hand of one person who makes any (random) gesture with both terminals. Both terminals - equipped with e.g. acceleration sensors, outputting signals caused by the terminals' gestures. Those signals, in digital form, are used, separately in each terminal, by an identical processing algorithms installed in both terminals, to generate identical cryptographic keys in both terminals. The identical cryptographic key is then stored in both terminals.

After this process the terminals can use the shared cryptographic key to establish a cryptographically secured communication session.
It will be clear that more than two terminals may be used. Moreover, several cryptographic keys may be generated and stored locally in the terminals in this way.

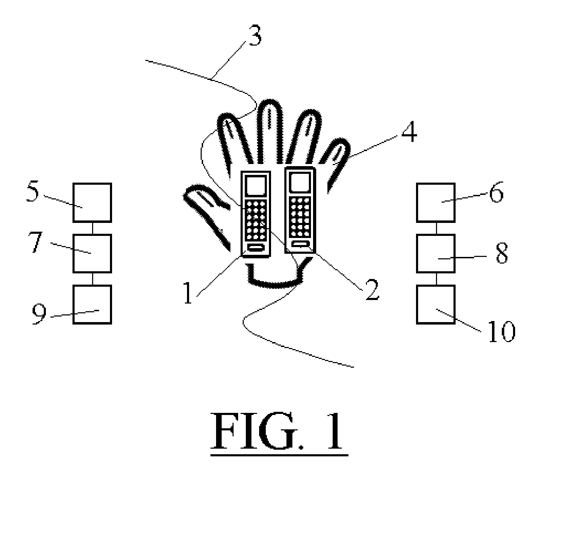

The invention will elucidated hereinafter with reference to figure 1, showing an exemplary embodiment of the present invention.

Figure 1 illustrates how, during a key generation session, in two terminals 1 and 2 identical cryptographic keys can be generated, which keys may be used in one or more future secure communication sessions between those terminals 1 and 2.

The key generation session comprises performing identical motions with both terminals 1 and 2, which (random) motion is indicated by curved line 3. Both terminals 1 and 2 may be held, during the key generation session (or action) in the hand 4 of e.g. one of the terminal users, who will e.g. shake both terminals for a while.

Both terminals are provided with e.g. accelerator sensors 5 and 6, which are able to convert the terminals' motions into digital data strings. As the motions of both terminals 1 and 2 are (mainly) identical, the data strings generated by the sensors 5 and 6 will be (mainly) identical as well. To compensate possible (small) differences in both data strings, those strings may be digitally standardized in processors 7 and 8 respectively in the terminals 1 and 2. Both data string, moreover, may be converted, by a suitable algorithm, installed in both processors 7 and 8, into a format which is suitable to be used, in relevant future secure communication sessions between both terminals 1 and 2, as the terminals' (identical) cryptographic keys. Finally, the cryptographic keys are stored in memories 9 and 10 in both terminals 1 and 2, in order to be available whenever needed in said future secure communication sessions between both terminals.

## Claims

1. Method for generating, in a key generation session, cryptographic keys in two or more devices which can be used in one or more future secure communication sessions between these terminals, said key generation session comprising the following steps:
- performing identical motions with each of said terminals;
- deriving, separately in each terminal, from the motion performed by it, a digital data string;
- forming, separately in each terminal, identical cryptographic keys based on the relevant terminal's digital data string;
- storing, separately in each terminal, said identical cryptographic keys.

2. Method according to claim 1, wherein said keys are used in one or more shared secret type secure communication sessions.

3. Terminal (1, 2), arranged for generating, during a key generation session, a cryptographic key which can be used in one or more future secure communication sessions with any other terminal using the same cryptographic key, the firstly said terminal comprising sensor means (5, 6) which are suitable for generating, due to a motion (3) undergone by said terminal during said key generation session, a digital data string;
the firstly said terminal, moreover, comprising processing means (7, 8) which are arranged for forming a cryptographic key based on said digital data string generated by the sensor means, as well as comprising storing means (9, 10) which are arranged for storing in said terminal, said cryptographic key formed in the processing means.
